# EUROPEAN PATENT SPECIFICATION

(11) **EP 2 344 781 B1**
(45) Date of publication and mention of the grant of the patent: **18.10.2017**
(21) Application number: 09828692.5
(22) Date of filing: 30.10.2009
(51) Int. Cl.: F16D 66/02, F16D 65/14, H02P 3/04, B66D 5/30, B60T 8/88, B60T 13/74, B60T 17/22, B66B 1/32, B66B 5/00, F16D 121/22, B66D 5/08

(54) **APPARATUS AND METHOD FOR SUPERVISING THE CONDITION OF A BRAKE**
VORRICHTUNG UND VERFAHREN ZUR ÜBERWACHUNG DES ZUSTANDS EINER BREMSE
APPAREIL ET PROCÉDÉ DE VÉRIFICATION DE L'ÉTAT D'UN FREIN

(30) Priority: 03.11.2008 FI 20080604; 03.08.2009 FI 20090289
(43) Date of publication of application: 20.07.2011
(73) Proprietor: Kone Corporation, 00330 Helsinki (FI)
(72) Inventor: KORHONEN, Tuukka, FI-02650 Espoo (FI); TENHUNEN, Asmo, FI-05830 Hyvinkää (FI); ALKULA, Petri, FI-13500 Hämeenlinna (FI); OLKKONEN, Mika, FI-05860 Hyvinkää (FI); HUPPUNEN, Jussi, FI-01700 Vantaa (FI)
(86) International application number: PCT/FI2009/050878
(87) International publication number: WO 2010/061050

(56) References cited:
- EP-A1- 1 431 226
- EP-A1- 1 462 673
- WO-A1-00/20320
- DE-A1- 10 149 604
- JP-A- 2003 083 372
- US-A- 4 984 659

## Description

The invention relates to electromagnetic brakes, more particularly to solutions for supervising the condition of a brake.

Electromagnetic brakes are used e.g. in conveying systems to prevent movement of a motor and of a conveying apparatus.

Typically an electromagnetic brake comprises a frame part and an armature part that moves in relation to the frame part. A brake also comprises an activation means, e.g. a spring, which exerts a force between the frame part and the armature part, which force activates the brake by pressing the armature part into contact against the object to be braked. The brake opens when current is connected to the electromagnet of the brake and the magnet pulls the armature part away from the object to be braked.

Collision of the mechanical parts of a brake against each other when the brake is activated or opened may cause a disturbing noise. The noise problem is eliminated whenever possible by adding e.g. a damper to the air gap between the frame part and the armature part, which when the brake is open produces a small so-called hysteresis air gap between the frame part and the armature part. The damper in this case prevents direct contact between the metal surfaces of the frame part and of the armature part, at the same time damping the noise of the brake and also speeding up the action of the brake.

The damper can be made of an elastic material, such as rubber. A damper made of rubber, however, wears and, generally becomes brittle as it ages. The damper wearing and/or becoming brittle may result in a progresseive reduction of the hysteresis air gap, in which case the metal surfaces of the frame part and of the armature part finally manage to strike against each other.
The damper can also be made of e.g. paper and glue. In this case the glue can cake; paper, on the other hand, can tear or bend over time. As a consequence of these problems the hysteresis air gap between the frame part and the armature part might increase, which in turn reduces the force produced by the electromagnet, because the force produced by the electromagnet decreases as the air gap between the frame part and the armature part of the brake increases. In the worst case, the electromagnet is no longer able to keep the brake open after the hysteresis air gap has enlarged.
Document EP 1462673 A1 discloses a procedure and a device for monitoring an electromagnetic brake. The arrangement has a coil creating a magnetic field through which moves an armature plate. From the time variation of the coil current an activation point is determined that represents the movement of the armature plate. The coil current for the activation point is compared with a predetermined first threshold value which is representative for a predetermined first closed state of the brake. Depending upon the output from this comparison a signal representative for the state of the spring that activates the brake is generated. However, document EP 1462673 A1 does not disclose a solution for determining the operating condition of the noise damping arrangement (11) of the brake, which noise damping arrangement (11) prevents direct contact between the metal surfaces of the frame part (3) and of the armature.

EP 1 431 226 A1 discloses an apparatus according to the preamble of claim 1 and a method according to the preamble of claim 7. Owing to, among other things, the aforementioned drawbacks, an apparatus and a method for supervising the condition of a brake are presented as an invention.

In relation to the characteristic attributes of the invention, reference is made to the claims.

By utilizing the invention the condition of a brake can be supervised during the lifetime of the brake such that e.g. wear and/or failure of the damping arrangement of the brake can be detected before the noise of the brake becomes disturbing or the brake is no longer able to open properly. Information about the possible servicing need of the brake can also in this case be notified in good time e.g. to the service center. The invention is very well suited for use e.g. in connection with elevator systems, escalator systems and travelator systems.

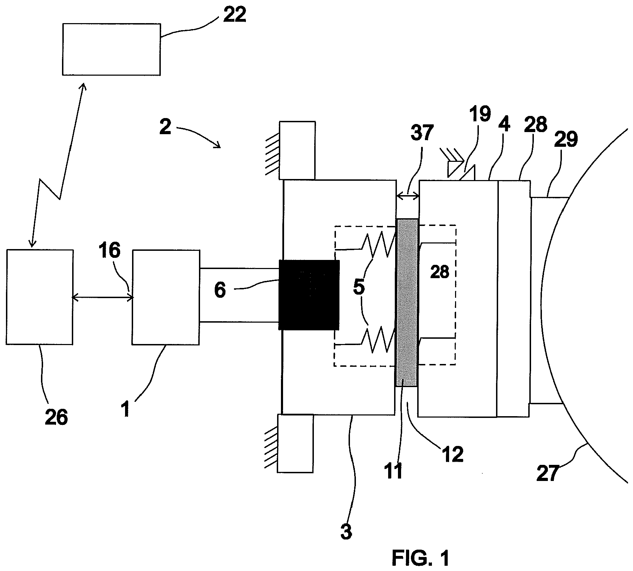

The invention relates to **an apparatus** for supervising the condition of a brake according to claim 1; further embodiments are set out in dependent claims. The invention also relates to **a method** for supervising the condition of a brake. according to claim 7; further embodiments are set out in the dependent claims. In the following, the invention will be described in more detail by the aid of some examples of its embodiments, which in themselves do not limit the scope of application of the invention, with reference to the attached drawings, wherein
- Fig. 1: presents the principles of a brake according to the invention connected to an apparatus according to the invention for supervising the condition of the brake
- Fig. 2: presents a brake control apparatus according to the invention as a block diagram
- Fig. 3: illustrates the force produced by the electromagnet of a brake in connection with brake control procedures
- Fig. 4: presents the current references of the coil of the brake in connection with a brake control procedure
- Fig. 5: presents the limit values of the permitted current of the coil of the brake
The drum brake 2 of the hoisting machine of an elevator presented in Fig. 1 comprises a frame part 3, which is fixed to the frame of the hoisting machine. The drum brake 2 also comprises an armature part 4 supported by the frame part 3 in a manner that allows movement, which armature part comprises a brake shoe 28. According to the invention, a damping arrangement 11, for damping the noise of the brake, is fitted into the space 12 in the brake drum 2 between the frame part 3 and the armature part 4. The damping arrangement 11 prevents direct contact between the metal surfaces of the frame part 3 and of the armature part 4, leaving between them a small hysteresis air gap when the brake is open.
The drum brake 1 also comprises two helical springs 5 as activation means, which exert a thrusting force between the frame part 3 and the armature part 4, which thrusting force endeavors to push the armature part 4 towards the brake drum 27 that is attached onto the rotating traction sheave of the hoisting machine. The armature part 4 comprises a brake pad 29, through which the brake shoe 28 connects mechanically to the brake drum 27 to brake the movement of the elevator when activating the drum brake 2. The drum brake opens when the current supplied to the coil 6 of the brake disposed in the frame part 3 achieves an electromagnetic force of attraction between the frame part 3 and the armature part 4 that is greater than the thrusting force achieved by the helical springs 5. In this case the armature part 4 starts to move towards the frame part 3. A force of attraction is produced, because both the frame part 3 and the armature part 4 comprise material that conducts magnetic flux, such as ferromagnetic iron, which together with the coil 6 of the brake forms a magnetic circuit. The magnetic flux produced by the current flowing in the coil 6 of the brake also flows between the frame part 3 and the armature part 4 over the air gap 37. The force of attraction brought about by the current of the coil 6 of the brake increases strongly when the air gap 37 between the frame part 3 and the armature part 4 decreases.

The supply conductors of the coil 6 of the brake are taken to the apparatus 1 for supervising the condition of the brake. With the apparatus 1 the operating condition of the damping arrangement 11 of the brake is supervised in the situation when the brake is open and the damping arrangement 11 leaves a small hysteresis air gap between the frame part 3 and the armature part. Wear or failure of the damping arrangement 11, such as a rubber damping ring or a damping strip made of paper and glue, can be detected in that the hysteresis air gap either reduces or decreases in size to outside the normal operating range. When the hysteresis air gap changes, the force of attraction produced by the current of the coil 6 of the brake also changes. Since the thrusting force produced between the frame part 3 and the armature part 4 by- the helical springs 5 can in this connection be assumed to be unchangeable, as a result of a change in the hysteresis air gap the current value at which the armature part 4 starts to move towards the brake drum 27 in connection with an activation procedure of the brake therefore changes. Thus in the starting situation of the armature part 4 the determined current of the coil 6 of the brake can also be used for supervising the operating condition of the damping arrangement 11 of the brake.

The apparatus 1 also comprises an output 16 for the signal indicating the operating condition of the brake. The signal is sent to the elevator control unit 26, which is connected to the apparatus 1 in a manner that enables data transfer. Information from the elevator control unit about the servicing need of the brake can be sent to the service center 22 according to need, e.g. via a wireless link.

In Fig. 1 a two-part position switch 19 of the brake is also fitted to the drum brake 2, the first part of which switch is fastened onto the frame part 3 and the second part onto the armature part 4. The switch contact of the position switch 19 opens and closes when the armature part 4 moves in relation to the frame part 3. With the position switch 19 a movement of the armature part 4 can be detected; on the other hand, movement of the armature part 4 can also be detected e.g. from changes in the current and/or voltage of the coil of the brake, in which case the position switch 19 is not necessarily needed.

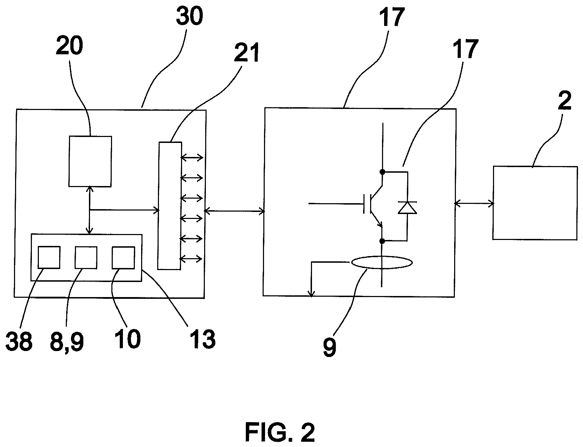

The brake control apparatus 7 presented in Fig. 2 is suited for use e.g. in connection with the embodiment of Fig. 1. The brake control apparatus 7 comprises the electricity supply circuit 17 of the brake and also brake control electronics 30. The electricity supply circuit 17 of the brake comprises a controllable solid-state switch, such as a MOSFET transistor, - IGBT transistor or corresponding, for controlling the current of the coil of the brake 2 with short pulses.

The brake control electronics 30 comprises a microprocessor 20, with which the operation of the brake control apparatus 7, such as the performing of brake control sequences, is managed. With the microprocessor 20 the operating condition of the brake 2 is also determined. The software of the microprocessor is saved in the memory 13; in addition, e.g. brake-specific parameters, such as the limit values of the permitted current of the coil 6 of the brake, are saved in the memory 13. The software comprises, in addition to brake control functions 38, a movement determination part 8, with which the starting situation of the armature part 4 of the brake is identified. The software also comprises a current determination part 9, with which the magnitude of the current of the coil 6 of the brake in the starting situation of the armature part 4 of the brake is determined. The software further comprises an operating condition determination part 10, with which the operating condition of the brake is determined using for the determination the aforementioned determined current of the coil 6 of the brake in the starting situation of the armature part 4 of the brake.

The current determination part 9 can determine the current of the coil 6 of the brake e.g. by reading the current data of the coil 6 of the brake formed by a current measurement 9 immediately it receives information from the movement determination part 8 that the armature part 4 of the brake has started to move. On the other hand, the current determination part 9 can also save in the memory 13 at regular intervals the current data of the coil of the brake formed by the current measurement 9. In this case the movement determination part 8 can together with the current determination -part 9 resolve from the values of current saved in the memory the starting situation of the armature part 4 as well as the magnitude of the current of the coil 6 of the brake that corresponds to the starting situation, e.g. by interpolation or by comparing ranges.

The microprocessor 20 communicates e.g. with the electricity supply circuit 17 of the brake as well as with the other control units connected to the brake control apparatus 7 via a communication interface 21.

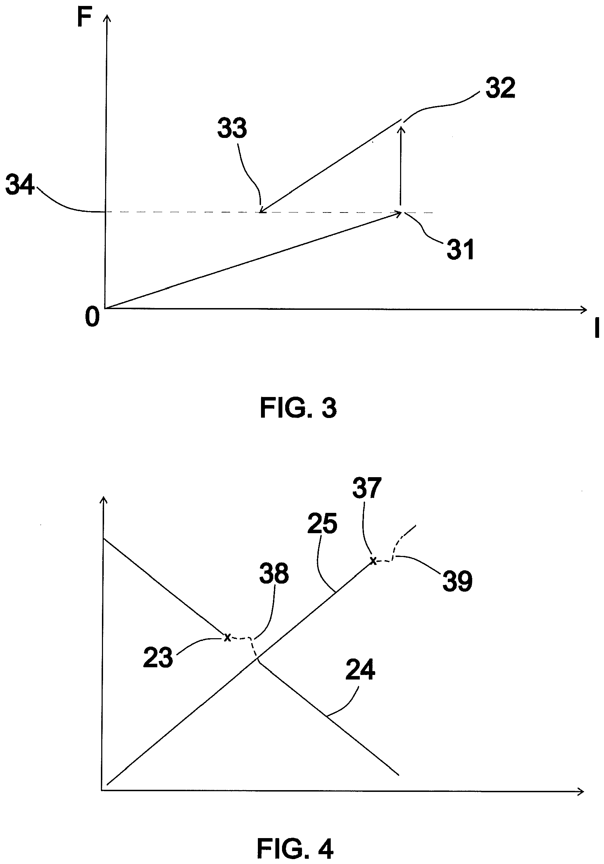

Fig. 3 illustrates how the force of attraction F produced by the current I of the coil 6 of the brake changes e.g. in connection with the brake control procedures referred to in the embodiments of Fig. 1 or 2. Initially the current I is zero, in which case the force F is zero and the brake is activated. After this the current I of the coil of the brake is started to be increased, in which case also the force F starts to increase. In the brake opening situation 31 the force of attraction F produced by the current I of the coil of the brake overcomes the thrusting force 34 produced between the frame part and the armature part by the activation means, and the armature part starts to move towards the frame part. When the armature part moves the air gap of the brake decreases, in which case the force of attraction F produced by the current I of the coil of the brake increases although the current here is kept as before during the movement. In the situation 32 the brake has opened, and the force of attraction F produced by the current I of the coil of the brake has considerably increased. When the brake is activated again after this, the current I of the coil of the brake must be reduced from the current according to the situation 32 until in the activation situation 33 of the brake the force of attraction produced by the current I of the coil of the brake falls below the thrusting force 34 between the frame part and the armature part, and the armature part starts to move controlled by the difference between the thrusting force 34 and the force of attraction F. The operating condition of the damping arrangement of the brake can be determined from the values of the current I of the coil of the brake that correspond to the activation situation 33; if the hysteresis air gap in this case starts to increase, the current I of the coil of the brake corresponding to the situation 33 starts to increase; when the hysteresis air gap decreases, the current I of the coil of the brake instead decreases. On the other hand, the operating condition of the activation means, such as a helical spring, of the brake can be determined in the opening situation 31, because as the spring loosens the current I, at which the brake starts to open, decreases. The changing of the current in the situation 31 as the spring loosens also affects the value of the current of the coil of the brake in the activation situation 33. Thus the limit values of the permitted current of the coil of the brake can be re-calibrated in the activation situation 33 on the basis of the change in the current of the opening situation 31.

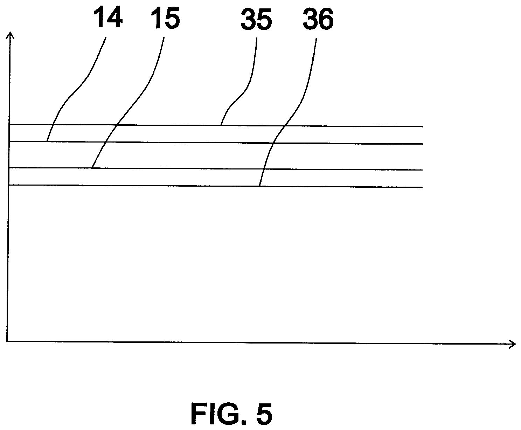

The graph 24 of Fig. 4 presents the current of a brake e.g. in connection with an activation procedure of a brake according to one of the preceding embodiments. Correspondingly, the graph 25 presents the current of the brake in connection with an opening procedure of the brake. The current is decreased on a ramp-like curve according to graph 24 in connection with an activation procedure of the brake, e.g. by means of a ramp-like current reference or supply voltage reference of the coil of the brake. At the time 23 the armature part of the brake starts to move towards the object to be braked. Depending on the control principle, the instantaneous transient that results from a change in the inductance of the magnetic circuit of the brake can be read from the current and/or supply voltage of the coil of the brake immediately after the starting moment of the armature part. The transient is marked in Fig. 4 with a dashed line 38. From this transient also the starting situation of the armature part of the brake can also be deduced. A corresponding type of transient 39 can be read from the current 25 and/or the supply voltage, when the armature part starts to move at the time 37 in connection with an opening procedure of the brake, and also this transient can be used to detect the starting of the armature part. Fig. 5 presents the limit values 14, 15, 35, 36 of the permitted current of the coil of the brake, which determine the ranges of permitted current. As shown in figure 5 and according to the invention, the first limit values 14, 15 determine the first range of permitted current. The second limit values 35, 36 determine the second range of permitted current, which is situated outside the first range of permitted current. The current of the coil of the brake at the time of starting of the armature part is compared to the these ranges of permitted current, and if the value of the current of the coil of the brake in this case differs from the first range of permitted current but is still positioned within the second range of permitted current, it is concluded that the damping arrangement of brake has progressively worn or failed so that it needs servicing. If the value of the current of the coil of the brake in this case differs also from the second range of permitted current, it is deduced that wear/failure of the damping arrangement has progressed so far that the next opening procedure of the brake is prevented.

The apparatus 1 according to the invention can also be applied as a tool of a serviceman, which tool can be connected in contact with the brake in connection with a service and/or condition inspection.

The thrusting force between the ferromagnetic -pieces in the magnetic circuit of the brake can be produced with many different activation means. In addition to a helical spring, the force effect can be achieved e.g. with a spring set, with a gas spring, or with a hydraulic means. In this case the number of components that produce the force effect can also differ.

The invention can be applied also to e.g. disc brakes, in addition to drum brakes.

It is obvious to the person skilled in the art that different embodiments of the invention are not limited to the examples described above, but that they may be varied within the scope of the claims presented below.

## Claims

1. Apparatus (1) for supervising the condition of a brake (2), which brake (2) comprises:
a frame part (3);
an armature part (4) supported by the frame part in a way that allows movement;
a spring or corresponding (5) for activating the brake;
a coil (6) for opening the brake;
and which apparatus (1) for supervising the condition of a brake comprises:
a brake control apparatus (7) for performing a brake control procedure;
a movement determination part (8), for determining the starting situation of the armature part (4) of the brake;
a current determination part (9), for determining the magnitude of the current of the coil (6) of the brake in the starting situation of the armature part (4) of the brake;
an operating condition determination part (10), for determining the operating condition of the brake from the magnitude of the current of the coil (6) of the brake;
**characterized in that** the brake comprises a damping arrangement (11) for damping the noise of the brake;
and **in that** the aforementioned damping arrangement (11) is fitted into the space (12) in the brake between the frame part (4) and the armature part (4), such that the damping arrangement (11) prevents direct contact between the metal surfaces of the frame part (3) and of the armature part (4), leaving between them a small hysteresis air gap when the brake (2) is open; and **in that** the aforementioned operating condition determination part (10) is arranged to determine the operating condition of the damping arrangement (11) of the brake from the magnitude of the current of the coil of the brake,
which magnitude of the current of the coil (6) of the brake is determined in the starting situation of the armature part (4) of the brake, in connection with an activation procedure of the brake;
wherein first (14, 15) and second (35, 36) limit values are provided, which determine the ranges of permitted current,
which first limit values (14, 15) determine the first range of permitted current, and which second limit values (35, 36) determine the second range of permitted current, which is situated outside the first range of permitted current,
and wherein the current of the coil of the brake at the time of starting of the armature part is compared to the these ranges of permitted current, and if the value of the current of the coil of the brake in this case differs from the first range of permitted current but is still positioned within the second range of permitted current, it is concluded that the damping arrangement (11) of brake has progressively worn or failed so that it needs servicing, and if the value of the current of the coil of the brake in this case differs also from the second range of permitted current, it is deduced that wear/failure of the damping arrangement (11) has progressed so far that the next opening procedure of the brake (2) is prevented.

2. Apparatus according to claim 1, **characterized in that** the brake control apparatus (7) comprises a memory (13);
in which memory (13) data about the magnitude of the current of the coil of the brake is recorded;
and in which memory (13) one or more limit values (14, 15, 35, 36) of permitted current are recorded; and **in that** the operating condition determination part (10) of the brake comprises a control for determining the operating condition of the brake from the aforementioned one or more limit values (14, 15, 35, 36) of the permitted current and also from the magnitude of the current of the coil of the brake.

3. Apparatus according to any of the preceding claims, **characterized in that** the apparatus comprises an output (16) for the signal indicating the operating condition of the brake.

4. Apparatus according to any of the preceding claims, **characterized in that** the brake control apparatus (7) comprises an electricity supply circuit (17), which electricity supply circuit comprises at least one controllable solid-state switch (18), for controlling the current of the coil (6) of the brake with short pulses.

5. Apparatus according to any of the preceding claims, **characterized in that** the movement determination part (8) comprises a brake position switch (19), for detecting movement of the armature part (4) of the brake.

6. Apparatus according to any of the preceding claims, **characterized in that** the movement determination part (8) comprises means (20) for processing the determined current and/or supply voltage of the coil (6) of the brake, for detecting movement of the armature part (4) of the brake.

7. Method for supervising the condition of a brake, in which method:
- a brake control procedure is performed, and movement of the armature part (4) of the brake occurring as a response to the brake control procedure is detected
- the magnitude of the current of the coil (6) of the brake in the starting situation of the armature part (4) of the brake is determined
- the operating condition of the brake (1) is determined from the magnitude of the current of the coil (6) of the brake
**characterized in that** apparatus is a damping arrangement (11) for damping the noise of the brake;
which damping arrangement (11) is fitted into the space (12) in the brake between the frame part (4) and the armature part (4), such that the damping arrangement (11) prevents direct contact between the metal surfaces of the frame part (3) and of the armature part (4), leaving between them a small hysteresis air gap when the brake (2) is open;
and in which method:
- the magnitude of the current of the coil (6) of the brake in the starting situation of the armature part (4) of the brake is determined, in connection with an activation procedure of the brake,
- the operating condition of the damping arrangement (11) of the brake is determined from the magnitude of the current of the coil of the brake, by an operating condition determination part (10),
- first (14, 15) and second (35, 36) limit values are provided, which determine the ranges of permitted current, which first limit values (14, 15) determine the first range of permitted current, and which second limit values (35, 36) determine the second range of permitted current, which is situated outside the first range of permitted current,
- the current of the coil of the brake at the time of starting of the armature part is compared to the these ranges of permitted current, and if the value of the current of the coil of the brake in this case differs from the first range of permitted current but is still positioned within the second range of permitted current, it is concluded that the damping arrangement (11) of brake has progressively worn or failed so that it needs servicing, and if the value of the current of the coil of the brake in this case differs also from the second range of permitted current, it is deduced that wear/failure of the damping arrangement (11) has progressed so far that the next opening procedure of the brake (2) is prevented.

8. Method according to claim 7, **characterized in that**:
- a first range of permitted current is determined for the current of the coil (6) of the brake by means of one or more first limit values (14, 15)
- the determined current of the coil (6) of the brake is compared to the first range of permitted current
- if the value of the current of the coil (6) of the brake in this case differs from the first range of permitted current, it is concluded that the brake needs servicing

9. Method according to claim 8, **characterized in that**:
- a second range of permitted current is determined for the current of the coil (6) of the brake by means of one or more second limit values (35, 36), and which second range of permitted current is fitted to be outside the first range of permitted current
- the determined current of the coil (6) of the brake is compared to the second range of permitted current
- if the value of the current of the coil (6) of the brake in this case differs from both the first and the second range of permitted current, the next opening procedure of the brake is prevented

10. Method according to any of claims 7 - 9, **characterized in that**:
- information about the servicing need of the brake is sent to the service center (22)

11. Method according to any of claims 7 - 10, **characterized in that**:
- at least one controllable switch (18) of the electricity supply circuit of the brake is controlled as a brake control procedure, for supplying current to the coil (6) of the brake and/or for disconnecting the flow of current

12. Method according to any of claims 7 - 11, **characterized in that**:
- the current of the coil (6) of the brake is adjusted towards the current reference (24) as a brake control procedure, by connecting at least one controllable switch (18) of the electricity supply circuit of the brake with short pulses

13. Method according to any of claims 7 - 12, **characterized in that**:
- movement of the armature part (4) is detected with the position switch (19) of the brake

14. Method according to any of claims 7 - 13, **characterized in that**:
- movement of the armature part (4) is detected from the current and/or supply voltage of the coil (6) of the brake

## Patentansprüche

1. Vorrichtung (1) zur Überwachung des Zustands einer Bremse (2), wobei die Bremse (2) Folgendes umfasst:
einen Rahmenteil (3);
ein Ankerteil (4), das von dem Rahmenteil in einer Weise getragen wird, die eine Bewegung ermöglicht;
eine Feder oder etwas Entsprechendes (5) zur Betätigung der Bremse;
eine Spule (6) zum Öffnen der Bremse;
und wobei die Vorrichtung (1) zur Überwachung des Zustands einer Bremse Folgendes aufweist:
eine Bremssteuervorrichtung (7) zum Durchführen eines Bremssteuerverfahrens;
einen Bewegungsbestimmungsteil (8) zur Bestimmung der Startsituation des Ankerteils (4) der Bremse;
einen Stromstärkebestimmungsteil (9) zur Bestimmung der Stromstärke der Spule (6) der Bremse in der Startsituation des Ankerteils (4) der Bremse;
einen Betriebszustandsbestimmungsteil (10) zur Bestimmung des Betriebszustands der Bremse aus der Stromstärke der Spule (6) der Bremse;
**dadurch gekennzeichnet, dass** die Bremse eine Dämpfungsanordnung (11) zum Dämpfen des Bremsgeräusches aufweist;
und dass die zuvor genannte Dämpfungsanordnung (11) in die Lücke (12) der Bremse zwischen dem Rahmenteil (4) und dem Ankerteil (4) eingepasst wird, sodass die Dämpfungsanordnung (11) einen direkten Kontakt zwischen der Metalloberfläche des Rahmenteils (3) und des Ankerteils (4) verhindert, wobei bei geöffneter Bremse (2) ein kleiner Hystereseluftspalt verbleibt;
die Stromstärke der Spule (6) der Bremse in der Startsituation des Ankerteils (4) der Bremse in Verbindung mit einem Betätigungsvorgang der Bremse bestimmt wird;
wobei erste (14, 15) und zweite (35, 36) Grenzwerte, die die Bereiche der zulässigen Stromstärke bestimmen, vorgesehen sind,
wobei die ersten Grenzwerte (14, 15) den ersten Bereich der zulässigen Stromstärke und die zweiten Grenzwerte (35, 36) den zweiten Bereich der zulässigen Stromstärke, der außerhalb des ersten Bereichs der zulässigen Stromstärke liegt, bestimmen, und wobei die Stromstärke der Spule der Bremse zum Zeitpunkt des Startens des Ankerteils mit diesen Bereichen der zulässigen Stromstärke verglichen wird.
Wenn sich der Wert der Stromstärke der Spule der Bremse in diesem Fall von dem ersten Bereich der zulässigen Stromstärke unterscheidet, jedoch immer noch innerhalb des zweiten Bereichs der zulässigen Stromstärke liegt, wird daraus schlussgefolgert, dass die Dämpfungsanordnung (11) der Bremse zunehmend abgenutzt oder ausgefallen ist, sodass sie gewartet werden muss. Und wenn sich der Wert der Stromstärke der Spule der Bremse in diesem Fall auch von dem zweiten Bereich der zulässigen Stromstärke unterscheidet, wird daraus schlussgefolgert, dass der Verschleiß/Ausfall der Dämpfungsanordnung (11) so weit fortgeschritten ist, dass der nächste Öffnungsvorgang der Bremse (2) verhindert wird.

2. Vorrichtung nach Patentanspruch 1, **dadurch gekennzeichnet, dass** die Bremssteuervorrichtung (7) einen Speicher (13) umfasst;
wobei im Speicher (13) Daten über die Stromstärke der Spule der Bremse aufgezeichnet sind;
und wobei im Speicher (13) mindestens ein Bereich der Grenzwerte (14, 15, 35, 36) der zulässigen Stromstärke aufgezeichnet ist;
und das Betriebszustandsbestimmungsteil (10) der Bremse eine Steuerung zur Bestimmung des Betriebszustands der Bremse aus den zuvor genannten ein oder mehreren Grenzwerten (14, 15, 35, 36) der zulässigen Stromstärke und auch aus der Stromstärke der Spule der Bremse aufweist.

3. Vorrichtung nach einem beliebigen der zuvor genannten Patentansprüche, **dadurch gekennzeichnet, dass** die Vorrichtung einen Ausgang (16) für das den Betriebszustand der Bremse anzeigende Signal umfasst.

4. Vorrichtung nach einem beliebigen der zuvor genannten Patentansprüche, **dadurch gekennzeichnet, dass** die Bremssteuervorrichtung (7) eine Stromzufuhrschaltung (17) aufweist, wobei die Stromzufuhrschaltung mindestens einen steuerbaren Festkörperschalter (18) zur Steuerung der Stromstärke der Spule (6) der Bremse mit kurzen Impulsen umfasst.

5. Vorrichtung nach einem beliebigen der zuvor genannten Patentansprüche, **dadurch gekennzeichnet, dass** der Bewegungsbestimmungsteil (8) einen Bremspositionsschalter (19) zur Erfassung der Bewegung des Ankerteils (4) der Bremse aufweist.

6. Vorrichtung nach einem beliebigen der zuvor genannten Patentansprüche, **dadurch gekennzeichnet, dass** der Bewegungsbestimmungsteil (8) Mittel (20) zur Verarbeitung der festgelegten Stromstärke und/oder Versorgungsspannung der Spule (6) der Bremse zur Erfassung der Bewegung des Ankerteils (4) der Bremse umfasst.

7. Methode zur Überwachung des Zustands einer Bremse, wobei mit dieser Methode:
- ein Bremssteuervorgang durchgeführt und eine Bewegung des Ankerteils (4) der Bremse als Reaktion auf den Bremssteuervorgang erfasst werden;
- die Stromstärke der Spule (6) der Bremse in der Startsituation des Ankerteils (4) der Bremse bestimmt wird;
- der Betriebszustand der Bremse (1) aus der Stromstärke der Spule (6) der Bremse bestimmt wird,
**dadurch gekennzeichnet, dass** die Vorrichtung eine Dämpfungsanordnung (11) zum Dämpfen des Bremsgeräusches ist;
wobei die Dämpfungsanordnung (11) in die Lücke (12) der Bremse zwischen dem Rahmenteil (4) und dem Ankerteil (4) eingepasst wird, sodass die Dämpfungsanordnung (11) einen direkten Kontakt zwischen der Metalloberfläche des Rahmenteils (3) und des Ankerteils (4) verhindert, wobei bei geöffneter Bremse (2) ein kleiner Hystereseluftspalt verbleibt;
und wobei mit dieser Methode:
- die Stromstärke der Spule (6) der Bremse in der Startsituation des Ankerteils (4) der Bremse in Verbindung mit einem Betätigungsvorgang der Bremse bestimmt wird;
- erste (14, 15) und zweite (35, 36) Grenzwerte, die die Bereiche der zulässigen Stromstärke bestimmen, vorgesehen sind, wobei die ersten Grenzwerte (14, 15) den ersten Bereich der zulässigen Stromstärke und die zweiten Grenzwerte (35, 36) den zweiten Bereich der zulässigen Stromstärke, der außerhalb des ersten Bereichs der zulässigen Stromstärke liegt, bestimmen;
- die Stromstärke der Spule der Bremse zum Zeitpunkt des Startens des Ankerteils mit diesen Bereichen der zulässigen Stromstärke verglichen wird. Wenn sich der Wert der Stromstärke der Spule der Bremse in diesem Fall von dem ersten Bereich der zulässigen Stromstärke unterscheidet, jedoch immer noch innerhalb des zweiten Bereichs der zulässigen Stromstärke liegt, wird daraus schlussgefolgert, dass die Dämpfungsanordnung (11) der Bremse zunehmend abgenutzt oder ausgefallen ist, sodass sie gewartet werden muss. Und wenn sich der Wert der Stromstärke der Spule der Bremse in diesem Fall auch von dem zweiten Bereich der zulässigen Stromstärke unterscheidet, wird daraus schlussgefolgert, dass der Verschleiß/Ausfall der Dämpfungsanordnung (11) so weit fortgeschritten ist, dass der nächste Öffnungsvorgang der Bremse (2) verhindert wird.

8. Methode nach Patentanspruch 7, **dadurch gekennzeichnet, dass**:
- der erste Bereich der zulässigen Stromstärke für die Stromstärke der Spule (6) der Bremse mittels einer oder mehrerer Reihen erster Grenzwerte (14, 15) bestimmt wird;
- die festgelegte Stromstärke der Spule (6) der Bremse mit dem ersten Bereich der zulässigen Stromstärke verglichen wird;
- wenn sich der Wert der Stromstärke der Spule (6) der Bremse in diesem Fall von dem ersten Bereich der zulässigen Stromstärke unterscheidet, daraus schlussgefolgert wird, dass die Bremse gewartet werden muss.

9. Methode nach Patentanspruch 8, **dadurch gekennzeichnet, dass**:
- der zweite Bereich der zulässigen Stromstärke für die Stromstärke der Spule (6) der Bremse mittels einer oder mehrerer Reihen zweiter Grenzwerte (35, 36) bestimmt wird, wobei der zweite Bereich der zulässigen Stromstärke außerhalb des ersten Bereichs der zulässigen Stromstärke liegt;
- die festgelegte Stromstärke der Spule (6) der Bremse mit dem zweiten Bereich der zulässigen Stromstärke verglichen wird;
- wenn sich der Wert der Stromstärke der Spule (6) der Bremse in diesem Fall von sowohl dem ersten als auch zweiten Bereich der zulässigen Stromstärke unterscheidet, daraus schlussgefolgert wird, dass der nächste Öffnungsvorgang der Bremse verhindert wird.

10. Methode nach einem beliebigen der Patentansprüche 7 bis 9, **dadurch gekennzeichnet, dass**:
- Informationen über den Wartungsbedarf der Bremse an das Wartungszentrum (22) gesendet werden.

11. Methode nach einem beliebigen der Patentansprüche 7 bis 10, **dadurch gekennzeichnet, dass**:
- mindestens ein steuerbarer Schalter (18) der Stromzufuhrschaltung der Bremse als Bremssteuervorgang zur Stromzufuhr zur Spule (6) der Bremse und/oder zum Trennen des Stromflusses gesteuert wird.

12. Methode nach einem beliebigen der Patentansprüche 7 bis 11, **dadurch gekennzeichnet, dass**:
- die Stromstärke der Spule (6) der Bremse als Bremssteuervorgang an die Stromstärkereferenz (24) angepasst wird, indem mindestens ein steuerbarer Schalter (18) der Stromzufuhrschaltung der Bremse mit kurzen Impulsen verbunden wird.

13. Methode nach einem beliebigen der Patentansprüche 7 bis 12, **dadurch gekennzeichnet, dass**:
- die Bewegung des Ankerteils (4) mit dem Positionsschalter (19) der Bremse erfasst wird.

14. Methode nach einem beliebigen der Patentansprüche 7 bis 13, **dadurch gekennzeichnet, dass**:
- die Bewegung des Ankerteils (4) aus der Stromstärke und/oder Versorgungsspannung der Spule (6) der Bremse erfasst wird.

## Revendications

1. Appareil (1) de supervision de l'état d'un frein (2), où le frein (2) comprend :
un châssis (3) ;
une armature (4) soutenue par le châssis de manière à permettre le mouvement ;
un ressort ou élément similaire (5) pour activer le frein ;
une bobine (6) pour ouvrir le frein ;
et où l'appareil (1) de supervision de l'état d'un frein comprend :
un appareil de commande de frein (7) pour effectuer la procédure de contrôle de frein ;
un élément de détermination de mouvement (8), pour déterminer la situation de départ de l'armature (4) du frein ;
un élément de détermination de courant (9), pour déterminer l'amplitude du courant de la bobine (6) du frein au départ de l'armature (4) du frein ;
un élément de détermination de condition de fonctionnement (10), pour déterminer la condition de fonctionnement du frein à partir de l'amplitude du courant de la bobine (6) du frein ;
**caractérisée en ce que** le frein comprend une disposition tampon (11) pour atténuer le bruit du frein ;
et par le fait que la disposition tampon susmentionnée (11) est adaptée dans l'espace (12) du frein entre le châssis (4) et l'armature (4), de façon à ce que cette disposition tampon (11) empêche tout contact direct entre les surfaces métalliques du châssis (3) et de l'armature (4), en maintenant entre elles un faible entrefer d'hystérésis quand le frein (2) est ouvert ;
l'amplitude du courant de la bobine (6) du frein est déterminée dans la situation de départ de l'armature (4) du frein, conjointement avec une procédure d'activation du frein ;
où les premières (14, 15) et deuxièmes (35, 36) valeurs de limite sont fournies pour déterminer les plages de courants autorisés,
où les premières valeurs de limite (14, 15) déterminent la première plage de courants autorisés et où les deuxièmes valeurs de limite (35, 36) déterminent la deuxième plage de courants autorisés, différente de la première,
et où le courant de la bobine du frein au départ de l'armature est comparé à ces plages de courants autorisés ; dans le cas où la valeur du courant de la bobine du frein diffère de la première plage de courants autorisés, mais est toujours comprise dans la deuxième plage de courants autorisés, il en est conclu que la disposition tampon (11) du frein s'est progressivement usée ou est défaillante et nécessite une intervention ; dans le cas où la valeur du courant de la bobine de frein diffère aussi de la deuxième plage de courants autorisés, il en est déduit que l'usure/la défaillance de la disposition tampon (11) a évolué au point que la prochaine procédure d'ouverture du frein (2) est impossible.

2. Appareil selon la revendication 1, **caractérisé en ce que** l'appareil de contrôle de frein (7) comprend une mémoire (13) ;
dans laquelle les données mémoire (13) relatives à l'amplitude du courant de la bobine de frein sont enregistrées ;
et dans laquelle (13) une ou plusieurs valeurs de limite (14, 15, 35, 36) de courant autorisé sont enregistrées ;
et par le fait que l'élément de détermination de condition de fonctionnement (10) du frein comprend un contrôle qui détermine la condition de fonctionnement du frein à partir d'une ou plusieurs valeurs de limite susmentionnées (14, 15, 35, 36) du courant autorisé et à partir de l'amplitude du courant de la bobine du frein.

3. Appareil selon une des revendications précédentes, **caractérisé par le fait que** l'appareil comprend une sortie (16) pour le signal indiquant la condition de fonctionnement du frein.

4. Appareil selon une des revendications précédentes, **caractérisé par le fait que** l'appareil de contrôle du frein (7) comprend un circuit d'alimentation électrique (17) incluant au moins un contacteur à relais contrôlable (18), afin de contrôler le courant de la bobine (6) du frein à l'aide de brèves impulsions.

5. Appareil selon une des revendications précédentes, **caractérisé en ce que** l'élément de détermination de mouvement (8) comprend un contacteur de position de frein (19), pour détecter le mouvement de l'armature (4) du frein.

6. Appareil selon une des revendications précédentes, **caractérisé en ce que** l'élément de détermination de mouvement (8) comprend des moyens (20) de traiter le courant déterminé et/ou la tension d'alimentation de la bobine (6) du frein, afin de détecter le mouvement de l'armature (4) du frein.

7. Méthode de supervision de l'état du frein, qui :
- effectue une procédure de contrôle du frein et détecte le mouvement de l'armature (4) du frein qui se produit en réaction à la procédure de contrôle du frein
- détermine l'amplitude du courant de la bobine (6) du frein au départ de l'armature (4) du frein
- détermine la condition de fonctionnement du frein (1) à partir de l'amplitude du courant de la bobine (6) du frein
**caractérisé en ce que** l'appareil est une disposition tampon (11) destinée à atténuer le bruit du frein ;
où la disposition tampon (11) est adaptée dans l'espace (12) du frein entre le châssis (4) et l'armature (4), de façon à ce que cette disposition tampon (11) empêche tout contact direct entre les surfaces métalliques du châssis (3) et de l'armature (4), en maintenant entre elles un faible entrefer d'hystérésis quand le frein (2) est ouvert ;
et dans cette méthode :
- l'amplitude du courant de la bobine (6) du frein dans la situation de départ de l'armature (4) du frein est déterminée conjointement avec une procédure d'activation du frein
- les premières (14, 15) et deuxièmes (35, 36) valeurs de limite qui déterminent les plages de courants autorisés sont fournies ; les premières valeurs de limite (14, 15) déterminent la première plage de courants autorisés tandis que les deuxièmes valeurs de limite (35, 36) déterminent la deuxième plage de courants autorisés et ne sont pas comprises dans la première plage de courants autorisés,
- le courant de la bobine du frein au départ de l'armature est comparé à ces plages de courants autorisés ; dans le cas où la valeur du courant de la bobine du frein diffère de la première plage de courants autorisés, mais est toujours comprise dans la deuxième plage de courants autorisés, il en est conclu que la disposition tampon (11) du frein s'est progressivement usée ou est défaillante et nécessite une intervention ; dans le cas où la valeur du courant de la bobine de frein diffère aussi de la deuxième plage de courants autorisés, il en est déduit que l'usure/la défaillance de la disposition tampon (11) a évolué au point que la prochaine procédure d'ouverture du frein (2) est impossible.

8. Méthode selon la revendication 7, **caractérisée en ce que** :
- une première plage de courants autorisés est déterminée pour le courant de la bobine (6) du frein au moyen d'une ou plusieurs premières valeurs de limite (14, 15)
- le courant de la bobine (6) du frein ainsi déterminé est comparé à la première plage de courants autorisés
- dans le cas où la valeur du courant de la bobine (6) du frein diffère de la première plage de courants autorisés, il en est conclu que le frein nécessite une intervention

9. Méthode selon la revendication 8, **caractérisée en ce que** :
- une deuxième plage de courants autorisés est déterminée pour le courant de la bobine (6) du frein au moyen d'une ou plusieurs deuxièmes valeurs de limite (35, 36) et cette deuxième plage de courants autorisés est différente de la première
- le courant de la bobine (6) du frein ainsi déterminé est comparé à la deuxième plage de courants autorisés
- dans le cas où la valeur du courant de la bobine (6) du frein n'est pas comprise dans la première et dans la deuxième plages de courants autorisés, la prochaine procédure d'ouverture du frein est rendue impossible

10. Méthode selon une des revendications 7 - 9, **caractérisée en ce que** :
- des informations relatives à l'intervention requise sur le frein sont envoyées au centre de service (22)

11. Méthode selon une des revendications 7 - 10, **caractérisée en ce que** :
- au moins un commutateur contrôlable (18) du circuit d'alimentation électrique du frein est commandé en tant que procédure de contrôle du frein, pour alimenter la bobine (6) du frein en courant et/ou pour déconnecter le flux de courant

12. Méthode selon une des revendications 7 - 11, **caractérisée en ce que** :
- le courant de la bobine (6) du frein est ajusté au plus près de la référence de courant (24) dans le cadre de la procédure de contrôle du frein, en connectant au moins un des commutateurs contrôlables (18) du circuit d'alimentation électrique du frein à l'aide de brèves impulsions

13. Méthode selon une des revendications 7 - 12, **caractérisée en ce que** :
- le mouvement de l'armature (4) est détecté via le commutateur de position (19) du frein

14. Méthode selon une des revendications 7 - 13, **caractérisée en ce que** :
- le mouvement de l'armature (4) est détecté à partir du courant et/ou de la tension d'alimentation de la bobine (6) du frein
